# EUROPEAN PATENT APPLICATION

(11) **EP 4 410 111 A1**
(43) Date of publication of application: **07.08.2024**
(21) Application number: 22875880.1
(22) Date of filing: 16.09.2022
(51) Int. Cl.: A23L 5/00, A23L 29/238, A23L 29/244, A23L 29/256, A23L 29/262, A23L 29/269, A23L 35/00

(54) **LIQUID EMULSION COMPOSITION**

(30) Priority: 30.09.2021 JP 2021160716
(71) Applicant: House Wellness Foods Corporation, Hyogo 664-0011 (JP); House Foods Corporation, Higashi-Osaka-shi, Osaka 577-8520 (JP)
(72) Inventor: TOMOTAKE, Muneaki, Itami-shi, Hyogo 664-0011 (JP); KUDO, Akihiro, Higashi-osaka-city, Osaka 577-8520 (JP); ISHIDA, Ryosuke, Itami-shi, Hyogo 664-0011 (JP); HIRAYAMA, Yoshitake, Itami-shi, Hyogo 664-0011 (JP); WADA, Ryo, Higashi-osaka-city, Osaka 577-8520 (JP); ITO, Kenji, Higashi-osaka-city, Osaka 577-8520 (JP)
(74) Representative: Hoffmann Eitle
(86) International application number: PCT/JP2022/034695
(87) International publication number: WO 2023/054009

(57) **Abstract**

It is an object of the present invention to provide a liquid emulsion composition which has a good smooth texture, without containing protein such as egg, and the present invention provides a liquid emulsion composition containing water, 50 mass% or less of an oil and fat, a cyclodextrin, a water-soluble gelling agent, and a dextrin.

## Description

### Technical Field

The present invention relates to an emulsion composition in the form of a liquid, which comprises water, an oil and fat, a cyclodextrin, a water-soluble gelling agent, and a dextrin.

### Background Art

Milk and eggs are common food ingredients and contained in many foods and drinks, and various foods and drinks having been cooked/produced particularly utilizing their emulsification action have become popular. However, milk and eggs are allergic substances included in 7 specific raw materials that are required to display based on the Food Labeling Standards, and people who are allergic to these raw materials cannot eat food and drink containing these raw materials.

Therefore, food and drink not containing/not utilizing milk and eggs, which even people who are allergic to milk and eggs can eat, have been developed and reported.

For example, Patent Literatures 1 to 3 each describe semi-solid or solid food and drink that are substantially free of proteins such as milk and eggs and utilize, instead of them, an emulsion composition formed of an oil-in-water emulsion composed of water, an oil and fat, a cyclodextrin, a water-soluble gelling agent, etc.

### Citation List

### Patent Literature

Patent Literature 1
   Japanese Patent Laid-Open No. 2021-019525
Patent Literature 2
   Japanese Patent No. 6871465
Patent Literature 3
   Japanese Patent No. 6871466

### Summary of Invention

### Technical Problem

On the other hand, in order to expand the scope of application of an emulsion composition that is substantially free of proteins such as milk and eggs and is formed of the aforementioned oil-in-water emulsion, the emulsion composition in the form of a liquid, which has been decreased in oil and fat content ratio, has been desired.

However, the present inventors have found that a liquid composition obtained by decreasing an oil and fat content ratio (for example, 50 mass% or less of an oil and fat) in the emulsion composition tastes thin and watery when it is eaten, and such a smooth texture (described as "smoothness" simply hereinafter) as felt in common emulsified liquid foods is not sufficiently felt or not felt.

Therefore, it is an object of the present invention to provide a liquid emulsion composition formed of the aforementioned oil-in-water emulsion, which has good smoothness while being decreased in oil and fat content ratio.

### Solution to Problem

The present inventors have earnestly studied to solve the above problem, and as a result, they have found that by blending a dextrin with a liquid emulsion composition formed of the aforementioned oil-in-water emulsion, which has been decreased in oil and fat content ratio, smoothness can be improved or enhanced. They have further found that by adding an ionic substance to the emulsion composition, a viscosity of the composition can be decreased/adjusted.

The present invention has been completed based on these new findings, and includes the following inventions.
[1] A liquid emulsion composition comprising water, 50 mass% or less of an oil and fat, a cyclodextrin, a water-soluble gelling agent, and a dextrin.
[2] The liquid emulsion composition according to [1], further comprising an ionic substance.
[3] The liquid emulsion composition according to [2], wherein the ionic substance is one or more selected from the group consisting of acids, amino acids, and salts.
[4] The liquid emulsion composition according to any one of [1] to [3], being substantially free of protein.
[5] The liquid emulsion composition according to any one of [1] to [4], wherein the cyclodextrin is α-cyclodextrin.
[6] The liquid emulsion composition according to any one of [1] to [5], wherein the water-soluble gelling agent is one or more selected from the group consisting of carboxymethyl cellulose, glucomannan, tamarind gum, xanthan gum, t-carrageenan, locust bean gum, λ-carrageenan, κ-carrageenan, gellan gum, an alginate, and guar gum.
[7] A method for producing a liquid emulsion composition, comprising a step of blending and mixing water, an oil and fat in an amount of 50 mass% or less, a cyclodextrin, a water-soluble gelling agent, and a dextrin.
[8] The production method according to [7], further comprising blending and mixing an ionic substance.
[9] A kit for producing a liquid emulsion composition comprising water, 50 mass% or less of an oil and fat, a cyclodextrin, a water-soluble gelling agent, and a dextrin, the kit comprising an oil and fat, a cyclodextrin, a water-soluble gelling agent, and a dextrin.
[10] The kit according to [9], wherein the liquid emulsion composition further comprises an ionic substance, and the kit further comprises an ionic substance.

The present specification incorporates the contents as described in the specification, etc. of Japanese Patent Application No. 2021-160716 filed on September 30, 2021, which is a priority document of the present application.

All publications, patents, and patent applications cited in the present specification are incorporated by reference in their entirety in the present specification.

### Advantageous Effect of Invention

According to the present invention, a liquid emulsion composition formed of the aforementioned oil-in-water emulsion, which has good smoothness while being decreased in oil and fat content ratio, can be provided.

### Description of Embodiments

The present invention relates to a liquid emulsion composition comprising water, 50 mass% or less of an oil and fat, a cyclodextrin, a water-soluble gelling agent, and a dextrin.

In the present invention, the "liquid emulsion composition" means a liquid composition that is obtained by emulsifying an oil and fat in an oil droplet-in-water form while being free of proteins such as milk and eggs as raw materials. In the present invention, the "liquid" means a liquid or a semi-liquid (e.g., sol, gel, or cream) having a viscosity, at an initial temperature of 25°C, of 8000 dPa·s or less (e.g., 7000 dPa·s or less, 6000 dPa·s or less, 5000 dPa·s or less, 4000 dPa·s or less, 3000 dPa·s or less, 2000 dPa·s or less, 1000 dPa·s or less, 500 dPa·s or less, 200 dPa·s or less, 150 dPa·s or less, 100 dPa·s or less, 50 dPa·s or less, 20 dPa·s or less, or 10 dPa·s or less). In the present invention, measurement of a viscosity of the liquid emulsion composition can be carried out in accordance with Methods for viscosity measurement of liquid (Japanese Industrial Standards JIS Z 8803) conventionally known. That is to say, the viscosity can be measured by a known B-type viscometer, and for example, using an appropriate rotor (e.g., rotor No. 1, No. 2, or No. 3) according to the viscosity range, measurement is started under the conditions of 60 rpm, and a value measured after 30 seconds can be adopted. The B-type viscometer to be used is not particularly limited, but for example, VISCOTESTER VT-04F (manufactured by RION CO., LTD.) used in the examples described later can be preferably used.

The viscosity of the liquid emulsion composition of the present invention can be adjusted by blending an ionic substance that will be described later in detail.

The liquid emulsion composition of the present invention can be used as a base for liquid foods and drinks, such as beverage, soup, sauce, dressing, Tare sauce, seasoning, and jelly.

In the present invention, the "oil and fat" means an edible animal or vegetable oil and fat (sometimes also referred to as an edible oil), and such an oil and fat is one having a solid fat content (SFC) at 10°C of 0% to 35%, preferably 0% to 30%, and more preferably 0% to 25%. The oil and fat is preferably one having SFC at 20°C of 0% to 25%, preferably 0% to 20%, and more preferably 0% to 15%. Examples of the oil and fat that is usable in the present invention include edible vegetable oils or fats, such as canola oil, rapeseed *sirasimeyu* oil, soybean oil, corn oil, cottonseed oil, peanut oil, sesame oil, rice oil, rice bran oil, camellia oil, safflower oil, olive oil, linseed oil, perilla oil, perilla seed oil, sunflower oil, palm oil, tea oil, copra oil, avocado oil, candlenut oil, grapeseed oil, cocoa butter, coconut oil, wheat germ oil, almond oil, evening primrose oil, castor oil, hazelnut oil, macadamia nut oil, rosehip oil, and grape oil (but not limited to). The edible animal oils or fats are preferably those containing no allergic substances (e.g., one or more selected from 7 specific raw materials and 21 items equivalent to specific raw materials) or those from which the allergic substances have been removed. The oils or fats may be used singly, or a combination of different oils or fats may be used.

In the liquid emulsion composition of the present invention, the oil and fat can be contained in an amount of 50 mass% or less, and for example, the oil and fat can be contained in an amount of 40 mass% or less, 30 mass% or less, 20 mass% or less, or 10 mass% or less. The lower limit of the amount of the oil and fat to be contained is not particularly limited, but the oil and fat can be contained in an amount of 1 mass% or more, 5 mass% or more, or 10 mass% or more. The range of the content of the oil and fat in the liquid emulsion composition of the present invention can be expressed using two numerical values individually selected from the aforementioned upper limit and lower limit numerical values. For example, in the liquid emulsion composition of the present invention, the oil and fat can be contained in an amount appropriately selected from the range of 1 mass% to 50 mass%, preferably 5 mass% to 40 mass%, more preferably 10 mass% to 40 mass%, and still more preferably 10 mass% to 20 mass%. In the present specification, the amount of each component is expressed in its component ratio when the total amount of the liquid emulsion composition of the present invention is 100 mass%.

In the liquid emulsion composition of the present invention, water can be contained in an arbitrary amount by which the water is capable of emulsifying the oil and fat to form, together with other components, an oil-in-water emulsion. In the liquid emulsion composition of the present invention, the water can be contained as the balance obtained by excluding other components, and can be contained in an amount of more than 50 mass%, e.g., 60 mass% or more, 70 mass% or more, or 80 mass% or more. The upper limit of the amount of the water to be contained is not particularly limited, but the water can be contained in an amount of 95 mass% or less, e.g., 90 mass% or less, or 80 mass% or less. The range of the content of the water in the liquid emulsion composition of the present invention can be expressed using two numerical values individually selected from the aforementioned upper limit and lower limit numerical values. For example, in the liquid emulsion composition of the present invention, the water can be contained in an amount appropriately selected from the range of more than 50 mass% to 95 mass%, 60 mass% to 90 mass%, or 70 mass% to 80 mass%.

The "cyclodextrin" means cyclic non-reducing maltooligosaccharide having glucose as a constituent unit, and examples thereof include α-cyclodextrin having 6 glucoses, β-cyclodextrin having 7 glucoses, and γ-cyclodextrin having 8 glucoses. In the present invention, α-cyclodextrin, β-cyclodextrin, γ-cyclodextrin, and arbitrary combinations thereof can be used. Preferably, α-cyclodextrin is used. The α-cyclodextrin has high solubility in water, and a liquid emulsion composition that is less grainy can be obtained.

In the liquid emulsion composition of the present invention, the cyclodextrin can be contained in an amount by which the cyclodextrin is capable of imparting, together with other components, desired physical properties to the liquid emulsion composition. For example, in the liquid emulsion composition, the cyclodextrin can be contained in an amount of 0.1 mass% or more, e.g., 0.5 mass% or more, 1 mass% or more, 1.5 mass% or more, or 2 mass% or more. The upper limit of the amount of the cyclodextrin to be contained is not particularly limited, but it can be 5 mass% or less, e.g., 4.5 mass% or less, 4 mass% or less, 3.5 mass% or less, 3 mass% or less, or 2.5 mass% or less. The range of the content of the cyclodextrin in the liquid emulsion composition of the present invention can be expressed using two numerical values individually selected from the aforementioned upper limit and lower limit numerical values. For example, in the liquid emulsion composition of the present invention, the cyclodextrin can be contained in an amount appropriately selected from the range of 0.1 mass% to 5 mass%, preferably 0.5 mass% to 4.5 mass%, more preferably 1 mass% to 4 mass%, and still more preferably 1.5 mass% to 3 mass%.

In the present invention, the "water-soluble gelling agent" generally means a substance that is soluble in water and imparts viscosity (sometimes also referred to as a thickening agent, a thickening stabilizer, a thickener, or the like). As such a water-soluble gelling agent, a polysaccharide thickener can be used, and examples thereof include carboxymethyl cellulose, glucomannan, tamarind gum, xanthan gum, t-carrageenan, locust bean gum, λ-carrageenan, κ-carrageenan, gellan gum, sodium alginate, and guar gum. The water-soluble gelling agents may be used singly, or a combination of different water-soluble gelling agents may be used. The water-soluble gelling agent is more preferably carboxymethyl cellulose, glucomannan, tamarind gum, xanthan gum, t-carrageenan, locust bean gum, λ-carrageenan, κ-carrageenan, gellan gum, or sodium alginate; the water-soluble gelling agent is still more preferably carboxymethyl cellulose, glucomannan, tamarind gum, xanthan gum, t-carrageenan, or locust bean gum; and the water-soluble gelling agent is particularly preferably carboxymethyl cellulose, glucomannan, tamarind gum, or xanthan gum.

In the liquid emulsion composition of the present invention, the water-soluble gelling agent can be contained in an amount by which the water-soluble gelling agent is capable of imparting, together with other components, desired physical properties to the liquid emulsion composition. For example, in the liquid emulsion composition, the water-soluble gelling agent can be contained in an amount of 0.01 mass% or more, e.g., 0.05 mass% or more, or 0.1 mass% or more. The upper limit of the amount of the water-soluble gelling agent to be contained is not particularly limited, but it can be 5 mass% or less, e.g., 2 mass% or less, 1 mass% or less, or 0.5 mass% or less. The range of the content of the water-soluble gelling agent in the liquid emulsion composition of the present invention can be expressed using two numerical values individually selected from the aforementioned upper limit and lower limit numerical values. For example, in the liquid emulsion composition of the present invention, the water-soluble gelling agent can be contained in an amount appropriately selected from the range of 0.01 mass% to 5 mass%, preferably 0.01 mass% to 2 mass%, more preferably 0.05 mass% to 1 mass%, and still more preferably 0.1 mass% to 0.5 mass%.

In the present invention, the "dextrin" means a dextrin having no cyclic structure and having any degree of polymerization, and one generally used in food and drink can be utilized. A dextrose equivalent (DE) value of the dextrin is not particularly limited, but a dextrin of 40 or less, e.g., about 0 to 30, can be utilized.

By blending the dextrin in the liquid emulsion composition of the present invention, smoothness can be imparted to the composition, or smoothness of the composition can be enhanced, and the smoothness of the composition can be adjusted by the blending amount of the dextrin. In general, by increasing the amount of the dextrin contained in the liquid emulsion composition, smoothness of the composition can be more enhanced.

In the liquid emulsion composition of the present invention, the dextrin can be contained in an arbitrary amount by which desired smoothness can be achieved in the composition. For example, in the liquid emulsion composition, the dextrin can be contained in an amount of 1 mass% or more, e.g., 5 mass% or more, 10 mass% or more, 15 mass% or more, or 20 mass% or more. The upper limit of the amount of the dextrin to be contained is not particularly limited, but it can be 50 mass% or less, e.g., 30 mass% or less, 25 mass% or less, or 20 mass% or less. The range of the content of the dextrin in the liquid emulsion composition of the present invention can be expressed using two numerical values individually selected from the aforementioned upper limit and lower limit numerical values. For example, in the liquid emulsion composition of the present invention, the dextrin can be contained in an amount appropriately selected from the range of 1 mass% to 50 mass%, preferably 1 mass% to 30 mass%, more preferably 5 mass% to 30 mass%, and still more preferably 5 mass% to 20 mass%. If the amount of the dextrin is less than 1 mass%, smoothness of the liquid emulsion composition of the present invention sometimes becomes insufficient, and physical properties of the liquid emulsion composition having a good texture cannot be achieved in some cases. On the other hand, if the amount of the dextrin is more than 50 mass%, viscosity of the liquid emulsion composition of the present invention is increased, and a liquid emulsion composition having desired physical properties cannot be obtained in some cases.

In the liquid emulsion composition of the present invention, the ionic substance can be further contained as needed. By blending the ionic substance in the liquid emulsion composition of the present invention, viscosity of the composition can be reduced, and the viscosity of the composition can be adjusted by the blending amount of the ionic substance. In general, by increasing the amount of the ionic substance contained in the liquid emulsion composition, the viscosity of the composition can be reduced more.

In the present invention, the "ionic substance" means a substance that is ionized to generate a cation and/or an anion when the substance is dissolved in water. As such substances, acids, amino acids, salts, etc. that are generally used as food, seasonings, additives, etc. in food and drink can be used. More specific examples include acids and salts thereof, such as tartaric acid, lactic acid, acetic acid, ascorbic acid, glutamic acid, citric acid, fumaric acid, malic acid, succinic acid, gluconic acid, phosphoric acid, nitric acid, nitrous acid, butyric acid, sulfuric acid, and carbonic acid; amino acids and salts thereof, such as histidine, isoleucine, leucine, lysine, methionine, phenylalanine, threonine, tryptophane, valine, arginine, cysteine, glutamine, glycine, proline, tyrosine, alanine, aspartic acid, asparagine, glutamic acid, and serine; and inorganic salts, such as sodium, potassium, calcium, magnesium, and iron. The ionic substances may be used singly, or a combination of different ionic substances may be used.

In the liquid emulsion composition of the present invention, the ionic substance can be contained in an arbitrary amount by which a desired viscosity of the composition can be achieved. For example, in the liquid emulsion composition, the ionic substance can be contained in an amount of 0.5 mass% or more, e.g., 1 mass% or more, 5 mass% or more, 10 mass% or more, or 15 mass% or more. The upper limit of the amount of the ionic substance to be contained is not particularly limited, but it can be 30 mass% or less, e.g., 25 mass% or less, 20 mass% or less, or 15 mass% or less. The range of the content of the ionic substance in the liquid emulsion composition of the present invention can be expressed using two numerical values individually selected from the aforementioned upper limit and lower limit numerical values. For example, in the liquid emulsion composition of the present invention, the ionic substance can be contained in an amount appropriately selected from the range of 0.5 mass% to 30 mass%, preferably 0.5 mass% to 25 mass%, more preferably 1 mass% to 20 mass%, and still more preferably 1 mass% to 15 mass%.

The liquid emulsion composition of the present invention can be substantially free of protein. Protein is generally composed of a hydrophobic amino acid residue and a hydrophilic amino acid residue, and from its amphiphilic characteristics, it has an emulsification action. On that account, in many emulsified foods, protein exerts a function as an emulsifying agent. On the other hand, in the present invention, a liquid emulsion composition which is composed of an oil-in-water emulsion containing water, the oil and fat, the cyclodextrin, the water-soluble gelling agent, the dextrin, and further containing the ionic substance as needed, and which is smooth and has a desired viscosity can be obtained without using protein functioning as an emulsifying agent. Accordingly, in the present invention, "substantially free of protein" means that protein is not contained in the liquid emulsion composition of the present invention in an aspect where protein exerts an emulsification action; and it is not intended that protein is not contained at all. Preferably, the above expression means that based on 1 g of the liquid emulsion composition of the present invention, the content of protein derived from the specific raw materials (allergic substances), etc. is less than 10 µg, and more preferably, it means that in the liquid emulsion composition of the present invention, protein that becomes allergic substances such as egg and milk (e.g., one or more selected from 7 specific raw materials and 21 items equivalent to specific raw materials) is not contained at all.

In the liquid emulsion composition of the present invention, other components usually used in the production of food and drink, such as a preservative, an antiseptic agent, an antioxidant, a coloring matter, a solvent, a solubilizing agent, a tonicity agent, a flavoring agent, a pH adjustor, a perfume, a sweetener, a taste component, and an acidulant, can be added as needed, in addition to the aforementioned components. The amounts of these other components added can be appropriately selected as long as the physical properties which are desired in the present invention are not hindered.

The liquid emulsion composition of the present invention can be produced by mixing water, the oil and fat, the cyclodextrin, the water-soluble gelling agent, the dextrin, and if necessary, the ionic substance and other components, and stirring them. The blending amount of each component is as previously described. The component may be mixed and stirred all together, or the components may be added in order (in any order) separately or in an arbitrary combination, and mixed and stirred. The resulting liquid emulsion composition can be provided after an appropriate container is filled with the composition, sealed, and subjected to heat sterilization treatment, etc.

The present invention also relates to a kit for producing the liquid emulsion composition of the present invention. In the kit, an oil and fat, a cyclodextrin, a water-soluble gelling agent, a dextrin, and if necessary, an ionic substance, other components, and water are contained, and they can be individually stored in different containers, or can be stored in an arbitrary combination in different containers.

The oil and fat, the cyclodextrin, the water-soluble gelling agent, the dextrin, the ionic substance, and other components contained in the kit may be each in the form of a solid such as a powder or a granulated powder (an excipient may be utilized as needed), or may be each in the form of a liquid such as an aqueous solution or a dispersion. The components can be made to serve as constituents of the kit by subjecting them to heat sterilization, etc. before or after storing them in containers according to their forms.

The kit can be utilized according to the aforementioned method for producing a liquid emulsion composition of the present invention, and by adding water (when any one of the components of the kit is in the form of a liquid, water contained therein can be utilized), an oil and fat, a cyclodextrin, a water-soluble gelling agent, a dextrin, and if necessary, an ionic substance, and other components to a container such as a bowl, and mixing and stirring them using a mixer, a blender or the like, the liquid emulsion composition of the present invention can be obtained.

Hereinafter, the present invention will be described with examples in more detail, but the present invention is in no way limited to these examples.

### Examples

### I. Preparation 1 of liquid emulsion composition

### 1-1. Experimental method

### (1) Preparation of liquid emulsion composition

Components of water, an oil and fat (palm oil), and, in powder forms, a cyclodextrin (α-cyclodextrin), a water-soluble gelling agent (xanthan gum), a dextrin (DE value 18), and an ionic substance (citric acid or salt (table salt)) were added and mixed to prepare a liquid emulsion composition.

The blending amount of each component was expressed in a blending ratio based on 100 mass% of the liquid emulsion composition finally obtained, and the cyclodextrin was blended in an amount of 3 mass%, the water-soluble gelling agent was blended in an amount of 0.1 mass%, and the oil and fat, the dextrin, and the ionic substance were each blended in a predetermined amount described in Table 1 below, and the amount of water was the balance.

Mixing of the components was carried out by stirring them at 20,000 rpm for 10 minutes using a hand blender. The resulting liquid emulsion compositions were each used for the following viscosity measurement and organoleptic evaluation tests.

### (2) Viscosity measurement of liquid emulsion composition

Regarding each of the liquid emulsion compositions having an initial temperature of 25°C, viscosity measurement was started under the conditions of the number of rotations of 60 rpm using a B-type viscometer (VISCOTESTER VT-04F (manufactured by RION CO., LTD.)) and a rotor No. 2, and a measured value after 30 seconds was adopted as the viscosity.

### (3) Organoleptic evaluation of liquid emulsion composition

Three expert panelists ate each of the liquid emulsion compositions, and they evaluated smoothness of each of the liquid emulsion compositions at ordinary temperature according to the five-grade evaluation of 5 to 1 in which smoothness of the target product (50 mass% of an oil and fat, 3 mass% of α-cyclodextrin, 0.1 mass% of xanthan gum, and water (the balance so that the total would become 100 mass%)) was "5". A smaller numerical value indicates lower smoothness.

### 1-2. Experimental results

Regarding the liquid emulsion compositions, results of the viscosity measurement and results of the organoleptic evaluation are shown in Table 1 below together with the blending amounts of the oil and fat, the dextrin, and the ionic substance (citric acid or salt (table salt)).

**[Table 1]**

| Oil and fat 40% | | Ionic substance | Citric acid | | | | Salt |
|---|---|---|---|---|---|---|---|
| | | | 0% | 10% | 5% | 1% | 10% |
| Dextrin | 20% | Viscosity Organoleptic evaluation | 4700 5 | 880 5 | 980 5 | 1200 5 | 950 5 |
| | 10% | Viscosity Organoleptic evaluation | 2800 5 | 850 5 | 1100 5 | 1400 5 | 1400 5 |
| | 5% | Viscosity Organoleptic evaluation | 2600 5 | 1000 5 | 1300 5 | 1600 5 | 1800 5 |
| Oil and fat 20% | | Ionic substance | 0% | 10% | 5% | 1% | 10% |
| Dextrin | 20% | Viscosity Organoleptic evaluation | 160 5 | 78 5 | 78 5 | 90 5 | 100 5 |
| | 10% | Viscosity Organoleptic evaluation | 140 4 | 68 4 | 70 4 | 85 4 | 95 4 |
| | 5% | Viscosity Organoleptic evaluation | 120 2 | 68 2 | 68 2 | 92 2 | 92 2 |
| | 0% | Viscosity Organoleptic evaluation | 150 1 | 61 1 | 63 1 | 65 1 | 72 1 |
| Oil and fat 10% | | Ionic substance | 0% | 10% | 5% | 1% | 10% |
| Dextrin | 20% | Viscosity Organoleptic evaluation | 121 4 | 52 4 | 52 4 | 62 4 | 84 4 |
| | 10% | Viscosity Organoleptic evaluation | 85 2 | 45 2 | 46 2 | 51 2 | 75 2 |

| | | | | | | | |
|---|---|---|---|---|---|---|---|
| **In the table, "%" denotes mass%.** | | | | | | | |

The compositions prepared without blending a dextrin strongly tasted thin and watery, and such smoothness as recognized in the target product was not felt (see column of composition containing 20 mass% of oil and fat and 0 mass% of dextrin).

The smoothness of the liquid emulsion composition can be improved by adding a dextrin, and when the blending amount of the dextrin was increased, a tendency toward an increase in smoothness of the liquid emulsion composition was observed. This tendency was also observed when the liquid emulsion composition containing 40 mass% of the oil and fat and 5 mass% of the dextrin was compared with the liquid emulsion composition containing 40 mass% of the oil and fat and 0 mass% of the dextrin (data are not shown).

On the other hand, when the dextrin was blended or when the blending amount of the dextrin was increased, a tendency toward an increase in viscosity of the liquid emulsion composition and a decrease in fluidity was observed.

The viscosity of the liquid emulsion composition can be decreased by adding the ionic substance, and when the blending amount of the ionic substance was increased, a tendency toward a decrease in viscosity of the liquid emulsion composition was observed.

From the above results, it has become apparent that the smoothness of the liquid emulsion composition having a low oil and fat content can be improved by adding the dextrin, and the viscosity of the composition can be adjusted by adding the ionic substance.

### II. Preparation 2 of liquid emulsion composition

### 2-1. Experimental method

### (1) Preparation of liquid emulsion composition

Components of water, an oil and fat (palm oil), and, in powder forms, a cyclodextrin (α-cyclodextrin), a water-soluble gelling agent (xanthan gum), a dextrin (DE value 18), and an ionic substance (tartaric acid, lactic acid, acetic acid, ascorbic acid, glutamic acid, leucine, tryptophane, phenylalanine, or histidine) were added and mixed to prepare a liquid emulsion composition.

The blending amount of each component was expressed in a blending ratio based on 100 mass% of the liquid emulsion composition finally obtained, and the amount of the oil and fat was 40 mass%, the amount of the cyclodextrin was 3 mass%, the amount of the water-soluble gelling agent was 0.1 mass%, the amount of the dextrin was 10 mass%, the amount of the ionic substance was 0 mass% or 10 mass%, and the amount of water was the balance.

Mixing of the components was carried out in the same manner as in Preparation of liquid emulsion composition in the aforementioned "I. Preparation 1 of liquid emulsion composition".

### (2) Viscosity measurement and organoleptic evaluation of liquid emulsion composition

Regarding the resulting liquid emulsion compositions, viscosity measurement and organoleptic evaluation were carried out in the same manner as described in the aforementioned "I. Preparation 1 of liquid emulsion composition".

### 2-2. Experimental results

Regarding the liquid emulsion compositions, results of the viscosity measurement and results of the organoleptic evaluation are shown in Table 2 below together with the blending amount of the ionic substance (tartaric acid, lactic acid, acetic acid, ascorbic acid, glutamic acid, leucine, tryptophane, phenylalanine, or histidine).

**[Table 2]**

| Oil and fat 40% | Ionic substance (%) | None (0%) | Tartaric acid (10%) | Lactic acid (10%) | Acetic acid (10%) | Ascorbic acid (10%) |
|---|---|---|---|---|---|---|
| Dextrin 10% | Viscosity Organoleptic evaluation | 2800 5 | 920 5 | 940 5 | 1500 5 | 880 5 |

| Oil and fat 40% | Ionic substance (%) | Glutamic acid (10%) | Leucine (10%) | Tryptophane (10%) | Phenylalanine (10%) | Histidine (10%) |
|---|---|---|---|---|---|---|
| Dextrin 10% | Viscosity Organoleptic evaluation | 1200 5 | 1300 5 | 1200 5 | 1200 5 | 1300 5 |

| | | | | | | |
|---|---|---|---|---|---|---|
| **In the table, "%" denotes mass%.** | | | | | | |

The viscosity of the liquid emulsion composition can be decreased by adding the ionic substance, and it has been confirmed that this effect is not limited to a specific ionic substance, and a wide variety of substances exert a similar effect.

## Claims

1. A liquid emulsion composition comprising water, 50 mass% or less of an oil and fat, a cyclodextrin, a water-soluble gelling agent, and a dextrin.

2. The liquid emulsion composition according to claim 1, further comprising an ionic substance.

3. The liquid emulsion composition according to claim 2, wherein the ionic substance is one or more selected from the group consisting of acids, amino acids, and salts.

4. The liquid emulsion composition according to any one of claims 1 to 3, being substantially free of protein.

5. The liquid emulsion composition according to any one of claims 1 to 4, wherein the cyclodextrin is α-cyclodextrin.

6. The liquid emulsion composition according to any one of claims 1 to 5, wherein the water-soluble gelling agent is one or more selected from the group consisting of carboxymethyl cellulose, glucomannan, tamarind gum, xanthan gum, t-carrageenan, locust bean gum, λ-carrageenan, κ-carrageenan, gellan gum, an alginate, and guar gum.

7. A method for producing a liquid emulsion composition, comprising a step of blending and mixing water, an oil and fat in an amount of 50 mass% or less, a cyclodextrin, a water-soluble gelling agent, and a dextrin.

8. The production method according to claim 7, further comprising blending and mixing an ionic substance.

9. A kit for producing a liquid emulsion composition comprising water, 50 mass% or less of an oil and fat, a cyclodextrin, a water-soluble gelling agent, and a dextrin, the kit comprising an oil and fat, a cyclodextrin, a water-soluble gelling agent, and a dextrin.

10. The kit according to claim 9, wherein the liquid emulsion composition further comprises an ionic substance, and the kit further comprises an ionic substance.
